# EUROPEAN PATENT SPECIFICATION

(11) **EP 2 568 614 B1**
(45) Date of publication and mention of the grant of the patent: **26.08.2015**
(21) Application number: 11180625.3
(22) Date of filing: 08.09.2011
(51) Int. Cl.: H04B 1/10, H04B 1/28

(54) **Receiver having controller to set local oscillators so as to render interfering signals filterable and associated methods**
Empfänger mit Steuergerät zum Einstellen von lokalen Oszillatoren zur Filterung von störenden Signalen und zugehörige Verfahren
Récepteur doté d'un contrôleur pour configurer des oscillateurs locaux afin de rendre filtrables les signaux interférents et procédés associés

(43) Date of publication of application: 13.03.2013
(73) Proprietor: BlackBerry Limited, Waterloo, ON N2K 0A7 (CA)
(72) Inventor: Kravets, Oleksiy, Waterloo, Ontario N2L 3W8 (CA)
(74) Representative: Fennell, Gareth Charles

(56) References cited:
- US-A1- 2007 207 736
- US-B1- 6 567 654

## Description

### Technical Field

The present disclosure relates to the field of receivers, and, more particularly, to low intermediate frequency (low-IF) receivers.

### Background

Mobile wireless communications systems continue to grow in popularity and have become an integral part of both personal and business communications. For example, cellular telephones allow users to place and receive voice calls almost anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

Even so, as the functionality of cellular communications devices continues to increase, so too does the demand for smaller devices which are easier and more convenient for users to carry. One challenge this poses for cellular device manufacturers is designing communications circuitry, including, for example, an RF transmitter, for operational and performance stability at increased power outputs within the relatively limited amount of space available for the communications circuitry.

U.S. Patent Application Publication No. 2007/207736 is directed to a method for reducing adjacent channel interference which begins by determining a desired channel of a radio frequency (RF) signal. The method continues by determining a plurality of potential local oscillations for the desired channel. The method continues by determining a proximal power level of an image frequency of each of the plurality of potential local oscillations to produce a plurality of proximal power levels. The method continues by selecting one of the plurality of potential local oscillations for down converting the desired channel based on the plurality of proximal power levels.

U.S. Patent Application No. 6,567,654 is directed to a double conversion tuner (DCT) free of spurious signals generated by the local oscillator frequencies and the crystal reference frequency is described therein. These spurious signals are generated by the first and/or second oscillator signals as well as by their harmonic frequencies. Spurious signals are also generated when the crystal reference frequency is not properly selected. In the past, complex-mechanical designs had to be used to isolate circuit blocks to reduce these spurious signals. By using a dynamic first intermediate frequency and/or selecting the value of the crystal reference frequency, these spurious signals can be reduced or eliminated.

### Brief Description of the Drawings

FIG. 1 is a schematic block diagram of a receiver in accordance with the present disclosure.
FIG. 2 is a more detailed block diagram of a receiver in accordance with the present disclosure.
FIG. 3A is a schematic spectral graph of a first intermediate frequency signal and an interfering signal, in accordance with the present disclosure.
FIG. 3B is a schematic spectral graph of a second intermediate frequency signal and an interfering signal, in accordance with the present disclosure.
FIG. 4A is a schematic spectral graph of a first intermediate frequency and an interfering signal after the controller of FIG. 1 sets the local oscillators.
FIG. 4B is a schematic spectral graph of a second intermediate frequency and an interfering signal after the controller of FIG. 1 sets the local oscillators.
FIG. 5 is a schematic block diagram illustrating example components of a mobile wireless communications device that may include the receiver in FIGS. 1-2.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a receiver may comprise a first local oscillator (LO), with a pair of IQ mixers coupled to the first LO and configured to generate complex IQ signals having an IQ imbalance. The receiver may also include a second LO, with a complex mixer coupled to the second LO and configured to mix the complex IQ signals and generate intermediate frequency (IF) signals based thereon. In addition, a controller may be coupled between the pair of IQ mixers and the complex mixer and may be configured to set the first LO and the second LO so that the complex IQ signals and an interfering signal generated due to the IQ imbalance of the complex IQ signals have a same sign and non-overlapping bands at an input of the complex mixer.

The controller may comprise an interference detector. In addition, the controller may further comprise a signal to noise ratio (SNR) estimator cooperating with the interference detector and coupled downstream of the complex mixer. In some applications, the interference detector may comprise a spectrum density estimator.

At least one analog to digital converter (ADC) may be downstream from the pair of IQ mixers and upstream of the complex mixer. A low noise amplifier may be coupled upstream from the pair of IQ mixers. A low pass filter may be coupled downstream of the second LO. An amplifier may be coupled downstream of the low pass filter. A demodulator coupled downstream of the amplifier.

A method aspect is directed to a method of operating a receiver comprising a pair of IQ mixers coupled to a first local oscillator and configured to generate complex IQ signals having an IQ imbalance, and a complex mixer coupled to a second LO and configured to mix the complex IQ signals and generate intermediate frequency (IF) signals based thereon. The method may include setting the first LO and the second LO so that the complex IQ signals and an interfering signal generated due to the IQ imbalance of the complex IQ signals have a same sign and non-overlapping bands at an input of the complex mixer, using a controller coupled between the pair of IQ mixers and the complex mixer.

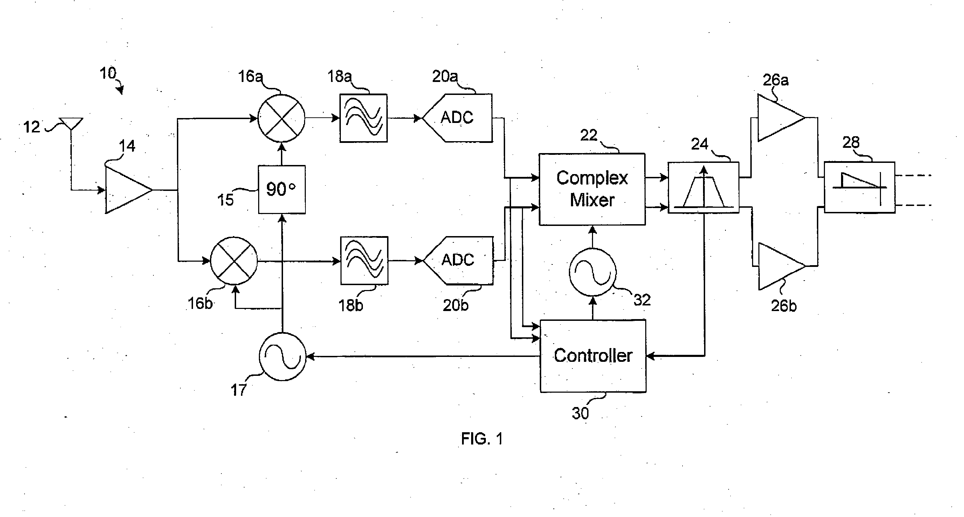

With reference to FIG. 1, a receiver **10** is now described. The receiver **10** is illustratively a low intermediate frequency (low-IF) receiver, and includes an antenna **12** configured to receive a transmitted signal. The antenna **12** is coupled to a low noise amplifier **14** and passes the received signal thereto as an input signal. Since the received signal may be very low power, the low noise amplifier **14** amplifies the input signal, and passes the input signal to a pair of downconverting mixers **16a, 16b.**

A first local oscillator (LO) **17** operating at a first intermediate frequency is coupled to the mixer **16b,** and to the mixer **16a** through a phase delay block **15.** The phase delay block **15** separates the phase of the signal received by the mixers **16a, 16b** from the first LO **17** by 90 degrees. This arrangement results in the mixers **16a, 16b** driving the input signal to the first intermediate frequency, and separating the input signal into in-phase (I) and quadrature (Q) components, thereby generating a first IF signal, as will be appreciated by those of skill in the art.

While the I and Q components of the signal are ideally 90 degrees apart in phase, in practice, this is difficult to accomplish. Therefore, it can be expected that the I and Q components are close to 90 degrees apart in phase, but not exactly 90 degrees apart. In addition, it can be expected that the amplitude of the I and Q components of the signal are close, but not equal. Thus, there is not only a phase imbalance between the I and Q components of the signal, but also an amplitude imbalance. This situation is referred to as an I-Q imbalance. Mixing in the presence of such an I-Q imbalance results in images of the input signal being created. As will be explained in detail below, the overall design of the receiver **10** seeks to avoid the situation where images of the input signal, in the same band thereof and opposite in sign thereto, are created, although it should appreciated that such images may occur before other portions of the receiver recognize this situation and compensate.

The mixers **16a, 16b** are in turn coupled to filters **18a, 18b.** The filters **18a, 18b** are coupled to analog to digital converters (ADCs) **20a, 20b.** The ADCs **20a, 20b** are in turn coupled to a complex mixer **22,** as well as a controller **30.** The controller is coupled to the second LO **32** and the first LO **17.** The complex mixer **22** is also coupled to a second local oscillator **32** operating at a second intermediate frequency, which can be referred to as the low intermediate frequency, and therefore drives the input signal to the low intermediate frequency.

A filter **24** is coupled to the complex mixer **22** and the controller **30.** The filter **24** is coupled to a pair of amplifiers **26a, 26b,** which are in turn coupled to a decoder **28.**

Those skilled in the art will appreciate that the ADCs **20a, 20b** and filter **24** are coupled to the controller so that the controller can detect interfering signals in the first IF signal, as well as the SNR of the second IF signal.

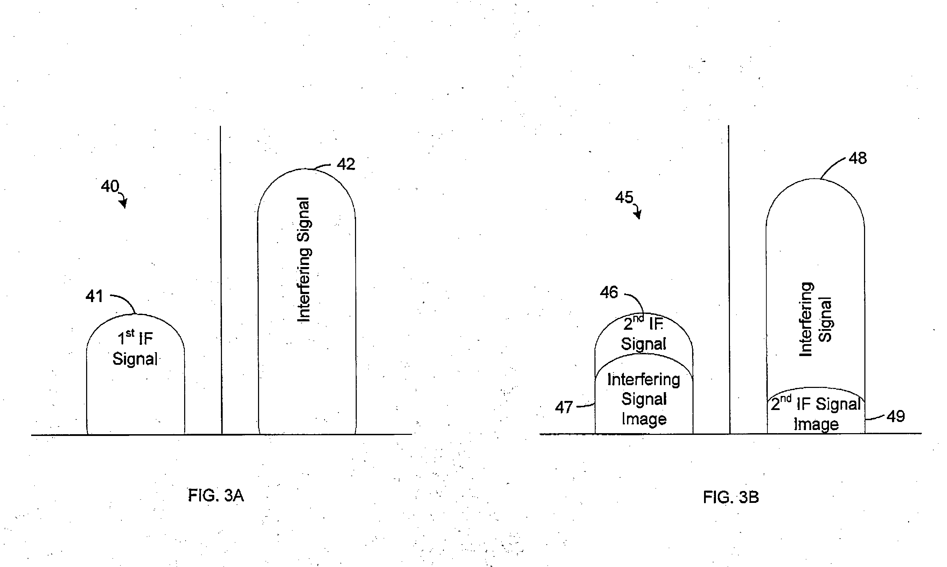

As explained earlier, it is undesirable for images of the input signal opposite in sign and in the same band to be created during downconversion to the first intermediate frequency, resulting in the first interfering images. This situation is depicted in the graph **40** of FIG. 3A, where an interfering signal **42** opposite in sign to the first IF signal **41** and in the same band has been created during downconversion of the input signal to the first IF.

This is undesirable because, during downconversion of the input signal to the second intermediate frequency, and therefore generation of a second IF signal, the first interfering images from the downconversion to the first intermediate frequency results in images opposite in sign and in the same band. These second interfering images may therefore have a same sign as the second IF signal, and may be in the same band. This situation is shown in the graph **45** of FIG. 3B, where there is an interfering signal image **47** having a same sign and being in the same band as the second IF signal **46.** Since a filter may not be able to remove the interfering signal image **47,** system performance is decreased, and the signal to noise ratio (SNR) of the receiver may be unacceptable.

Consequently, to address this situation, it is desirable for the first interfering images to have a same sign as the first IF signal and to not be in the same band. If such first interfering images can be obtained, then the second interfering images will be opposite in sign to the second IF signal, and can be easily filtered out, greatly increasing the performance and SNR of the receiver.

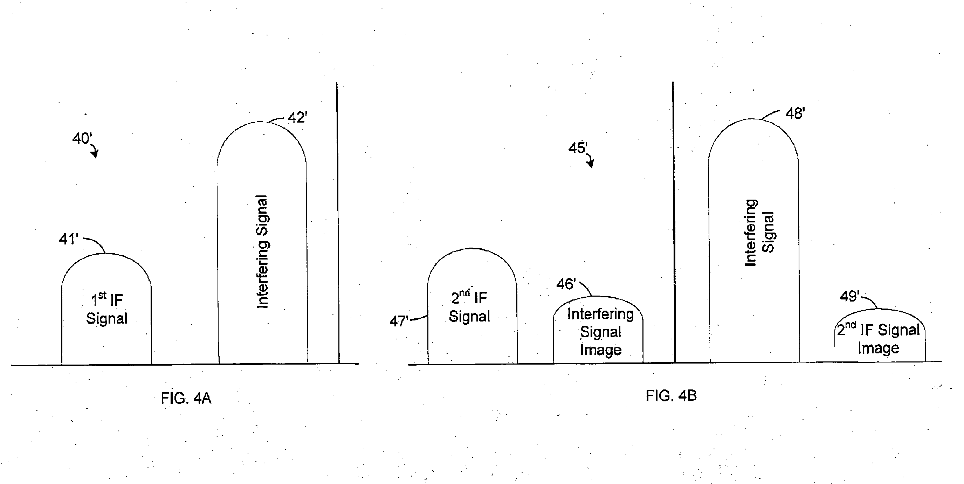

The receiver **10** accomplishes this via the controller **30,** which sets the second LO **32** and first LO **17** such that the first IF signal and the interfering signal generated due to the phase imbalance have a same sign and non-overlapping bands at an input to the complex mixer **22.** The graph **40'** of FIG. 4A shows this, with the first IF signal **41'** and the interfering signal **42'** having a same sign and non-overlapping bands. Consequently, the images generated by downconverting the first IF frequency to the second IF frequency, the interfering signal image **46'** and the second IF signal image **49',** do not overlap the second IF signal **47'.** Therefore, these unwanted images may be filtered out by the filter **24.**

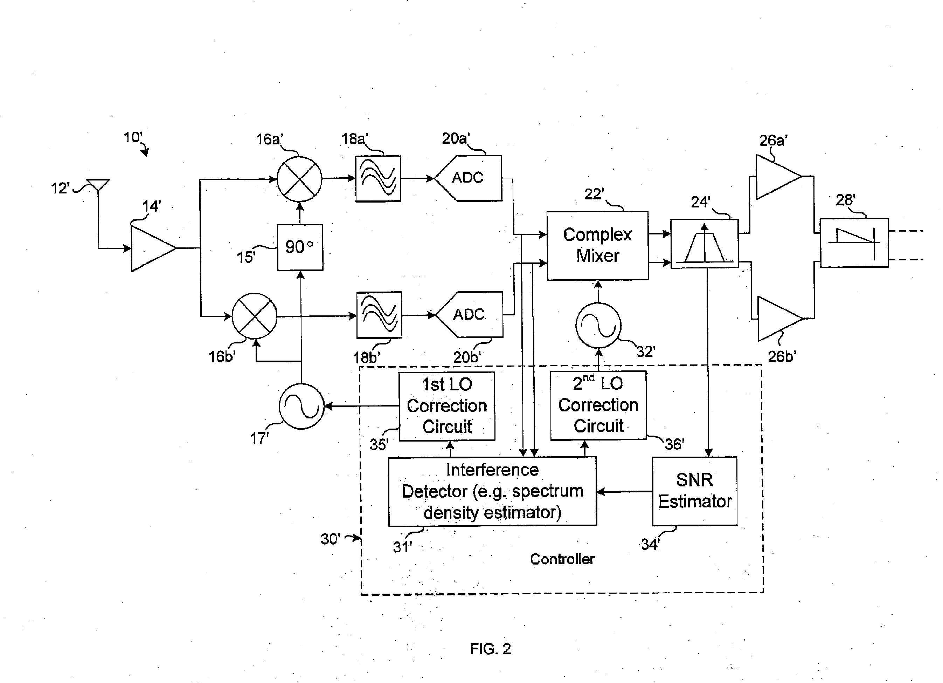

With reference to FIG. 2, further details of the controller **30'** are now described. The controller **30'** comprises an interference detector **31',** such as a spectrum density estimator, cooperating with an SNR estimator **34'.** The SNR estimator **34'** is coupled to the filter **24',** is configured to determine the SNR of the second IF signal after filtering, and passes the SNR to the interference detector **31'.** The interference detector **31'** is coupled to the ADCs **20a', 20b',** as well as first and second LO correction circuits **35', 36',** and is configured to determine the presence of interfering signals on the output of the ADCs. The first LO correction circuit **35'** is coupled to the first LO **17',** and similarly the second LO correction circuit **36'** is coupled to the second LO **32'.** The first and second LO correction circuits **35', 36'** cooperate to set the first and second LOs **17', 36'** such that the first IF signal and the interfering signal generated due to the phase imbalance have a same sign and non-overlapping bands at an input to the complex mixer **22'.**

As will be appreciated by those of skill in the art, the first LOs **17, 17'** and second LOs **32, 32'** may each be part of a phase locked loop (not shown). In addition, it should be understood that some of the illustrated components, such as the ADCs **20a, 20a', 20b, 20b'** may not be necessary, and that the embodiments herein should not be limited to the components shown.

Those skilled in the art will appreciate that the present disclosure includes methods of making and operating the receivers **10, 10'** described above.

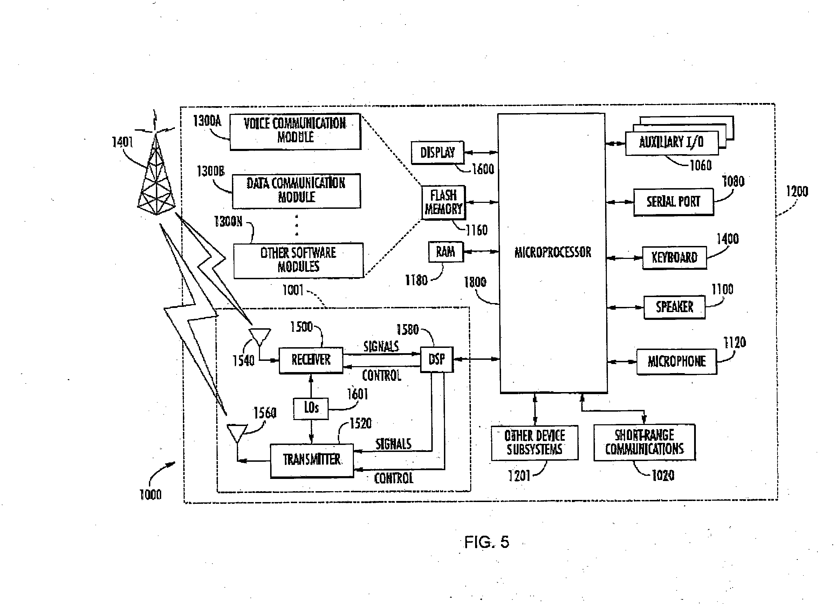

Exemplary components that may be used in various embodiments of the above-described electronic device are now described with reference to an exemplary mobile wireless communications device **1000** shown in FIG. 5. The device **1000** illustratively includes a housing **1200,** a keypad **1400** and an output device **1600.** The output device shown is a display **1600,** which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures, for example). The keypad 1400 may include a mode selection key, or other hardware or software for switching between text entry and telephony entry.

In addition to the processing device **1800,** other parts of the mobile wireless communications device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications or modules **1300A-1300N** on the device **1000,** such as software modules for performing various steps or operations. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A receiver (10) comprising:
a first local oscillator, LO, (17);
a pair of in-phase and quadrature, IQ, mixers (16a, 16b) coupled to said first LO and configured to generate complex IQ signals having an IQ imbalance;
a second LO (32);
a complex mixer (22) coupled to said second LO and configured to mix the complex IQ signals and generate intermediate frequency, IF, signals based thereon; and
a controller (30) coupled to said pair of IQ mixers and to said complex mixer, the controller comprising an interference detector (31') for determining a presence of an interfering signal generated due to the IQ imbalance of the complex IQ signals;
wherein the controller is configured to;
set a frequency of said first LO so that the complex IQ signals and the interfering signal have a same frequency sign and non-overlapping bands at an input of said complex mixer; and
set a frequency of said second LO.

2. The receiver (10') of Claim 1, wherein said controller (30') further comprises a signal to noise ratio (SNR) estimator (34') cooperating with said interference detector (31') and coupled downstream of said complex mixer (22').

3. The receiver (10') of Claim 1, wherein said interference detector (31') comprises a spectrum density estimator.

4. The receiver (10) of Claim 1, further comprising at least one analog to digital converter (ADC) (20a, 20b) downstream from said pair of IQ mixers (16a, 16b) and upstream of said complex mixer (22).

5. The receiver (10) of Claim 1, further comprising a low noise amplifier (14) coupled upstream from said pair of IQ mixers (16a, 16b).

6. The receiver (10) of Claim 1, further comprising a low pass filter (24) coupled downstream of said second LO (32).

7. The receiver (10) of Claim 6, further comprising an amplifier (26a, 26b) coupled downstream of said low pass filter (24).

8. The receiver (10) of Claim 7, further comprising a demodulator (28) coupled downstream of said amplifier (26a, 26b).

9. A method of operating a receiver (10) comprising a pair of in-phase and quadrature, IQ, mixers (16a, 16b) coupled to a first local oscillator, LO, (17) and configured to generate complex IQ signals having an IQ imbalance, and a complex mixer (22) coupled to a second LO (32) and configured to mix the complex IQ signals and generate intermediate frequency, IF, signals based thereon, the method comprising:
determining a presence of an interfering signal generated due to the IQ imbalance of the complex IQ signals;
setting a frequency of the first LO (17) so that the complex IQ signals and the interfering signal have a same frequency sign and non-overlapping bands at an input of the complex mixer, using a controller (30) coupled to the pair of IQ mixers and to the complex mixer; and
setting a frequency of the second LO (32).

10. The method of Claim 9, wherein the controller (30') comprises an interference detector (31').

11. The method of Claim 10, wherein the controller further comprises a signal to noise ratio, SNR, estimator (34') cooperating with the interference detector (31') and coupled downstream of the complex mixer (22').

12. The method of Claim 11, wherein the interference detector (31') comprises a spectrum density estimator.

## Patentansprüche

1. Empfänger (10) mit:
einem ersten Lokaloszillator, LO, (17),
einem Paar von In-Phase- und Quadratur-, IQ-, Mischern (16a, 16b), die an den ersten LO gekoppelt sind und dazu konfiguriert sind, komplexe IQ-Signale zu erzeugen, die ein IQ-Ungleichgewicht aufweisen,
einem zweiten LO (32),
einem komplexen Mischer (22), der an den zweiten LO gekoppelt ist und dazu konfiguriert ist, die komplexen IQ-Signale zu mischen und darauf beruhend Zwischenfrequenz-, ZF-, Signale zu erzeugen, und
einer Steuereinheit (30), die an das Paar von IQ-Mischern und an den komplexen Mischer gekoppelt ist, wobei die Steuereinheit einen Interferenzdetektor (31') zum Bestimmen eines Vorhandenseins eines wegen des IQ-Ungleichgewichts der komplexen IQ-Signale erzeugten Interferenzsignals,
wobei die Steuereinheit dazu konfiguriert ist:
eine Frequenz des ersten LO so einzustellen, dass die komplexen IQ-Signale und das interferierende Signal ein gleiches Frequenzvorzeichen und nicht überlappende Bänder an einem Eingang des komplexen Mischers haben, und
eine Frequenz des zweiten LO einzustellen.

2. Empfänger (10') nach Anspruch 1, wobei die Steuereinheit (30') ferner eine Signal-Rausch-Verhältnis-, SRV-, Schätzeinheit (34') aufweist, die mit dem Interferenzdetektor (31') zusammenarbeitet und dem komplexen Mischer (22') nachgeschaltet ist.

3. Empfänger (10') nach Anspruch 1, wobei der Interferenzdetektor (31') eine Spektraldichte-Schätzeinheit aufweist.

4. Empfänger (10) nach Anspruch 1, ferner mit mindestens einem dem Paar von IQ-Mischern (16a, 16b) nachgeschalteten und dem komplexen Mischer (22) vorgeschalteten Analog-digital-Wandler (ADC) (20a, 20b).

5. Empfänger (10) nach Anspruch 1, ferner mit einem rauscharmen Verstärker (14), der dem Paar von IQ-Mischern (16a, 16b) vorgeschaltet ist.

6. Empfänger (10) nach Anspruch 1, ferner mit einem Tiefpassfilter (24), der dem zweiten LO (32) nachgeschaltet ist.

7. Empfänger (10) nach Anspruch 6, ferner mit einem Verstärker (26a, 26b), der dem Tiefpassfilter (24) nachgeschaltet ist.

8. Empfäner (10) nach Anspruch 7, ferner mit einem Demodulator (28), der dem Verstärker (26a, 26b) nachgeschaltet ist.

9. Verfahren zum Betreiben eines Empfängers (10) mit einem Paar von In-Phase- und Quadratur-, IQ-, Mischern (16a, 16b), die an einen ersten Lokaloszillator, LO, (17) gekoppelt sind und dazu konfiguriert sind, komplexe IQ-Signale zu erzeugen, die ein IQ-Ungleichgewicht aufweisen, und einem komplexen Mischer (22), der an einen zweiten LO (32) gekoppelt ist und dazu konfiguriert ist, die komplexen IQ-Signale zu mischen und darauf beruhend Zwischenfrequenz-, ZF-, Signale zu erzeugen, wobei das Verfahren Folgendes aufweist:
Bestimmen eines Vorhandenseins eines wegen des IQ-Ungleichgewichts der komplexen IQ-Signale erzeugten Interferenzsignals,
Einstellen einer Frequenz des ersten LO (17) so, dass die komplexen IQ-Signale und das interferierende Signal ein gleiches Frequenzvorzeichen und nicht überlappende Bänder an einem Eingang des komplexen Mischers haben, unter Verwendung einer Steuereinheit (30), die an das Paar von IQ-Mischern und an den komplexen Mischer gekoppelt ist, und
Einstellen einer Frequenz des zweiten LO (32).

10. Verfahren nach Anspruch 9, wobei die Steuereinheit (30') einen Interferenzdetektor (31') aufweist.

11. Verfahren nach Anspruch 10, wobei die Steuereinheit (30') ferner eine Signal-Rausch-Verhältnis-, SRV-, Schätzeinheit (34') aufweist, die mit dem Interferenzdetektor (31') zusammenarbeitet und dem komplexen Mischer (22') nachgeschaltet ist.

12. Verfahren nach Anspruch 11, wobei der Interferenzdetektor (31') eine Spektraldichte-Schätzeinheit aufweist.

## Revendications

1. Récepteur (10) comprenant :
un premier oscillateur local, LO, (17) ;
une paire de mélangeurs (16a, 16b) en phase et en quadrature IQ, couplés audit premier LO et configurés pour générer des signaux IQ complexes ayant un déséquilibre IQ ;
un deuxième LO (32) ;
un mélangeur complexe (22) couplé audit deuxième LO et configuré pour mélanger les signaux IQ complexes et pour générer des signaux de fréquence intermédiaire IF, sur la base de ceux-ci ; et
un dispositif de commande (30) couplé à ladite paire de mélangeurs IQ et audit mélangeur complexe, le dispositif de commande comprenant un détecteur d'interférence (31') permettant de déterminer la présence d'un signal d'interférence généré en raison du déséquilibre IQ des signaux IQ complexes ;
où le dispositif de commande est configuré :
pour régler une fréquence dudit premier LO de sorte que les signaux IQ complexes et le signal d'interférence aient un même signe de fréquence et des bandes non-chevauchantes au niveau d'une entrée dudit mélangeur complexe ; et
pour régler une fréquence dudit deuxième LO.

2. Récepteur (10) de la revendication 1, dans lequel ledit dispositif de commande (30') comprend également un estimateur (34') de rapport signal sur bruit (SNR) coopérant avec ledit détecteur d'interférence (31') et couplé en aval du mélangeur complexe (22').

3. Récepteur (10) de la revendication 1, dans lequel ledit détecteur d'interférence (31') comprend un estimateur de densité spectrale.

4. Récepteur (10) de la revendication 1, comprenant en outre au moins un convertisseur analogique-numérique (ADC) (20a, 20b) situé en aval de ladite paire de mélangeurs IQ (16a, 16b) et en amont dudit mélangeur complexe (22).

5. Récepteur (10) de la revendication 1, comprenant en outre un amplificateur à faible bruit (14) couplé en amont de ladite paire de mélangeurs IQ (16a, 16b).

6. Récepteur (10) de la revendication 1, comprenant en outre un filtre passe-bas (24) couplé en aval dudit deuxième LO (32).

7. Récepteur (10) de la revendication 6, comprenant en outre un amplificateur (26a, 26b) couplé en aval dudit filtre passe-bas (24).

8. Récepteur (10) de la revendication 7, comprenant en outre un démodulateur (28) couplé en aval dudit amplificateur (26a, 26b).

9. Procédé permettant de faire fonctionner un récepteur (10) comprenant une paire de mélangeurs (16a, 16b) en phase et en quadrature IQ, couplés audit premier oscillateur Local LO (17) et configurés pour générer des signaux IQ complexes ayant un déséquilibre IQ, et un mélangeur complexe (22) couplé à un deuxième LO (32) et configuré pour mélanger les signaux IQ complexes et pour générer des signaux de fréquence intermédiaire IF, sur la base de ceux-ci, le procédé comprenant le fait :
de déterminer une présence d'un signal d'interférence généré en raison du déséquilibre IQ des signaux IQ complexes ;
de régler une fréquence du premier LO (17) de sorte que les signaux IQ complexes et le signal d'interférence aient un même signe de fréquence et des bandes non-chevauchantes au niveau d'une entrée du mélangeur complexe, en utilisant un dispositif de commande (30) couplé à la paire de mélangeurs IQ et au mélangeur complexe ; et
de régler une fréquence du deuxième LO (32).

10. Procédé de la revendication 9, dans lequel le dispositif de commande (30') comprend un détecteur d'interférence (31').

11. Procédé de la revendication 10, dans lequel le dispositif de commande comprend en outre un estimateur (34') de rapport signal sur bruit, SNR, coopérant avec le détecteur d'interférence (31') et couplé en aval du mélangeur complexe (22').

12. Procédé de la revendication 11, dans lequel le détecteur d'interférence (31') comprend un estimateur de densité spectrale.
